# EUROPÄISCHE PATENTSCHRIFT

(11) **EP 0 495 449 B1**
(45) Veröffentlichungstag und Bekanntmachung des Hinweises auf die Patenterteilung: **02.08.1995**
(21) Anmeldenummer: 92100499.0
(22) Anmeldetag: 14.01.1992
(51) Int. Cl.: F16C 13/00, E05D 13/00

(54) **Laufrolleneinrichtung für Führung von Torblättern**
Roller assembly for guidng door panels
Assemblage de roulette pour guidage des panneaux de portes

(30) Priorität: 15.01.1991 DE 4101014
(43) Veröffentlichungstag der Anmeldung: 22.07.1992
(73) Patentinhaber: Hörmann KG Brockhagen, 33803 Steinhagen (DE)
(72) Erfinder: Hörmann, Thomas J. Dipl.-Ing., D-6690 St. Wendel (DE)
(74) Vertreter: Flügel, Otto, Dipl.-Ing.

(56) Entgegenhaltungen:
- EP-A- 0 168 791
- DE-B- 1 120 284
- GB-A- 1 035 418
- GB-A- 2 022 178
- US-A- 3 142 859
- US-A- 3 722 968
- US-A- 3 909 066
- US-A- 4 378 136

## Beschreibung

Die Erfindung betrifft eine Laufrolleneinrichtung für die Führung von Torblättern mit einer am Torblatt gehaltenen Achse und einer auf dieser gleitend drehbar gelagerten, in einer ortsfest gehaltenen Führungsschiene abrollend eingreifende Laufrolle, die gegen ein Abrutschen von der in dem Eingriffsraum der Führungsschiene stummelförmig endenden Achse gesichert gehalten ist, wobei an dem im Eingriffsraum der Führungsschiene auslaufendem Ende der stummelförmigen Achse eine Haltevorrichtung angeordnet ist, welche an der stummelförmigen Achse als ein radial nach außen gerichteter Kragen ausgeformt ist, dem die auf die Achse von deren dem den Kragen aufweisenden Ende entgegengesetzten Achsende her aufgeschobene Laufrolle mit einer Anlaufschulter gegen Abrutschen gesichert in Längsrichtung der Achse gesehen gegenüberliegt.

Laufrolleneinrichtungen dieser Art sind in vielfacher Ausfertigung und insbesondere Verstellbarkeit bekannt. Derartige Laufrolleneinrichtungen werden insbesondere für die Führung von Sektionaltoren mit in Bewegungsrichtung aufeinanderfolgend aneinander angelenkten Paneelen verwendet. Es sind jedoch auch eine Vielzahl anderer Verwendungsmöglichkeiten derartiger Laufrolleneinrichtungen bekannt, bspw. für Schiebehängetüren, wie sie in der US-A,3,142,859 beschrieben sind. Diese vorbekannte gattungsbildende Vorrichtung weist u.a. einen Bock auf, in dem eine Laufrolle angeordnet ist, welche in einer Führungsschiene in horizontaler Richtung geführt ist. Die Laufrolle dieser vorbekannten Vorrichtung hat eine zentrische Bohrung, die sich auf einer Seite der Laufrolle erweitert. In diese zentrische Bohrung ist eine Achse eingesteckt, welche die Laufrolle mit dem Bock verbindet, wobei die Achse an ihrem dem Bock zugewandten Ende nietförmig ausgebildet ist, so daß sie mit einem Kragen den Bock hintergreift. An ihrem dem Bock gegenüberliegenden Ende weist die Laufrolleneinrichtung eine Platte auf, die kreisförmig ausgebildet ist und deren Durchmesser größer ist als der Durchmesser der Achse, so daß diese Platte in dem erweitert ausgebildeten Teil der Bohrung angeordnet werden kann und das Laufrad zwischen dem Bock und der Platte drehbar einspannt.

Darüberhinaus ist aus der US-A-3,909,066 eine Laufrolleneinrichtung bspw. für Förderbänder bekannt. Hierbei handelt es sich um eine Stützrolle, welche eine rostfreie Stahlachse mit einem Ende aufweist, das als Gewinde ausgebildet ist. An dem dem Gewinde gegenüberliegenden Ende der Achse ist diese abgesetzt ausgebildet, so daß sie einen Vorsprung bildet, an dem ein auf die Achse aufgeschobenes Laufrad anliegt. Dieses Laufrad hat eine zentrische Ausnehmung, in welche eine Kappe eingesteckt ist, welche eine Ringnut aufweist, in die ein in der Ausnehmung des Laufrades umlaufender Kragen eingreift.

Ausgehend von dem voranstehend genannten Stand der Technik ist es Aufgabe der Erfindung, eine Laufrolleneinrichtung der gattungsgemäßen Art zu schaffen, die störungsfrei in die Laufschiene eingreift und deren Montage besonders einfach ist.

Die Lösung dieser Aufgabenstellung sieht vor, daß die Achse als Rohr und der Kragen als nach radial auswärts gerichtete Aufbördelung des Rohres ausgebildet ist und daß eine Kappe vorgesehen ist, die das den Kragen aufweisende Ende der Achse übergreifend an der Laufrolle festlegbar ist.

Eine derart ausgebildete Laufrolleneinrichtung ist somit im Bereich ihrer Achse kontruktiv wesentlich vereinfacht, so daß eine einfache und kostengünstige Herstellungsweise sowie eine einfache Montage der Achse innerhalb der Laufrolleneinrichtung erfolgen kann.

Somit ist erfindungsgemäß vorgesehen, daß die Achse als Rohr ausgebildet ist, das an seinem in den Eingriffsraum der Führungsschiene frei endend abragenden Ende mit einer Aufbördelung versehen ist, die sich radial nach außen über den Rohrmantel hinweg erstreckt und damit den Kragen bildet, gegen den eine Anlaufschulter an der Achsnabe der Laufrolle anläuft, wenn die Laufrolle versucht, die Achse über dieses Ende zu verlassen. Nach einem weiteren Merkmal der Erfindung ist vorgesehen, daß eine Kappe an dem den Kragen aufweisenden Ende der Achse übergreifend an der Laufrolle festlegbar ist. Vorzugsweise ist die Achse um eine vorbestimmte Strecke in ihrer Achsrichtung in einem Bock verschiebbar gelagert. Die Kappe ist vorzugsweise an der Laufrolle und zwar vorzugsweise in einem Stirnseitenbereich zwischen Achsnabe und Lauffläche, mittels einer Klippverbindung festgelegt, die vorzugsweise aus drei in Radialrichtung federelastischen Vorsprüngen besteht, an denen hakenförmige Ausbildungen ausgeformt sind, die an den abgewandten Berandungen von Öffnungen angreifen, die den Zwischenbereich der Laufrolle axial durchgreifen.

Zwischen der Kappe und der Laufrolle, ggfs. vergrößert durch axiale Aushöhlungen in der Laufrolle und/oder der Kappe, ist ein Freiraum für die Aufnahme von Schmierfett vorgesehen, der mit dem Gleitspalt zwischen dem Achsmantel und der Achsnabeninnenfläche der Laufrolle schmierend in Verbindung steht. Durch die Kappe ist dieser Gleitspalt im übrigen abgedeckt, was von besonderem Vorteil ist, weil Schmutzeinwanderungen von dieser Achsendseite her unterbunden sind, von welcher Seite her ansonst der Schmutzeinfall wegen Wirbel bei Windeinfall und dgl. weitaus größer und störender ist als von der Seite des Torblattes her gesehen.

Diese und weitere Ausbildungen der Erfindung ergeben sich aus den Unteransprüchen, insbesondere im Zusammenhang mit dem in der Zeichnung wiedergegebenen Ausführungsbeispiel, auf das besonders Bezug genommen wird und dessen nachfolgende Beschreibung die Erfindung näher erläutert.

Es zeigen:
- Figur 1: eine schematisch in Bewegungsrichtung des Torblattes gesehene Teilquerschnittsansicht eines Seitenbereiches eines Torpaneels mit angeschlossener Laufrolleneinrichtung und
- Figur 2: eine perspektivische Ansicht, eine Stirnansicht in Richtung der Achse, einen achsmittig angeordneten Längsschnitt durch die Laufrolleneinrichtung sowie diesen Langsschnitt beschränkt durch die Laufrolle, die Achse und die Kappe, letztere insoweit als Sprengansicht zu verstehen.

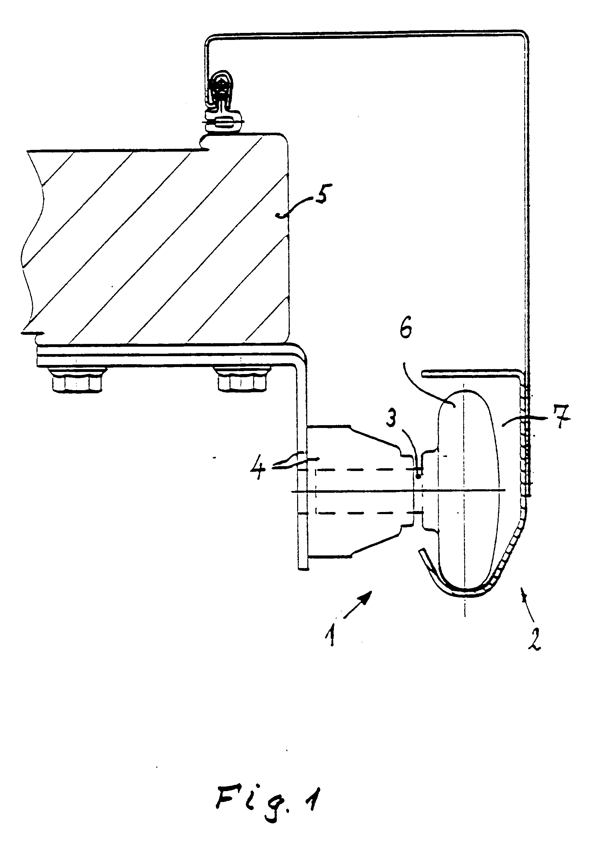

Figur 1 zeigt die Laufrolleneinrichtung, die in eine Führungsschiene 2 eingreift, die in angedeuteter Weise an einer nichtdargestellten Zarge ortsfest gehalten ist und mittels einer Dichtung an der Außenfläche eines Torblattes aus einer Reihe von in Bewegungsrichtung aufeinanderfolgend aneinander angelenkter Torblattpaneele 5 angreift. Die Laufrolleneinrichtung 1 ist andeutungsweise mit Hilfe eines Bockes 4 an der Innenfläche des zugehörigen Torblattpaneels 5 angeordnet, ggfs. hinsichtlich der räumlichen Zuordnung justierend einstellbar. Die Achse 3 der Laufrolleneinrichtung ist in den Bock 4 aufgenommen, ggfs. um eine gewisse Strecke in ihrer Achsrichtung verschiebbar. Auf der Mantelfläche der Achse 3 ist gleitend drehbar die Laufrolle 6 angeordnet, die in den Eingriffsraum der Führungsschiene 2 eingesetzt ist und in deren Laufrillenbereich abrollt sowie gegen Ausgleiten durch einen dem Laufrillenbereich gegenüberliegenden Laufwandungsabschnitt gehindert ist, der mit dem Laufrillenbereich über eine Hochwandung der Führungsschiene 2 einstückig in Verbindung steht.

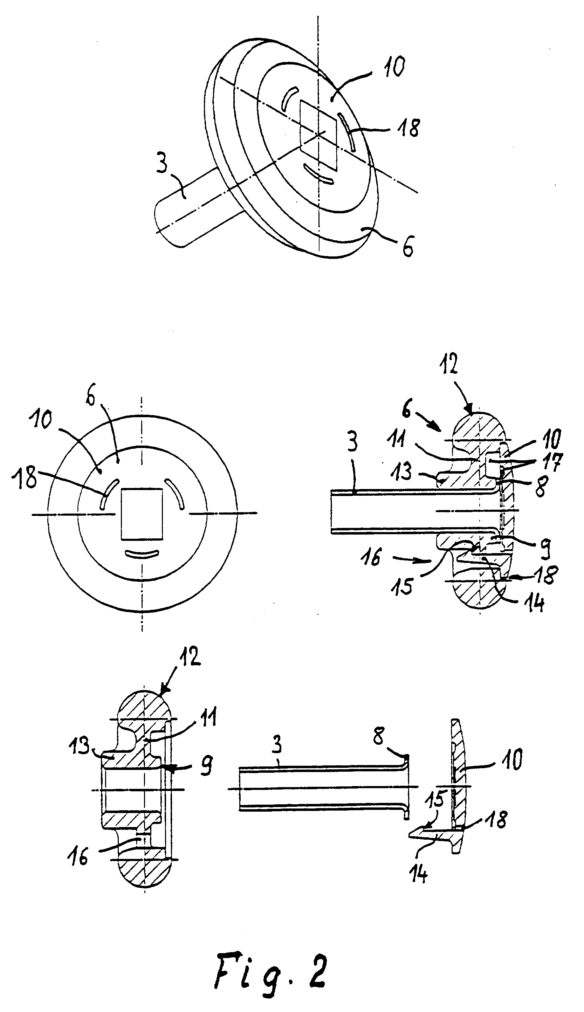

Die Einzeldarstellungen der Figur 2 zeigen den Aufbau des Ausführungsbeispieles. Die perspektivische Darstellung der fertig montierten Laufrolleneinrichtung zeigt die Achse 3, die Laufrolle 6 und die mit dieser verbundenen Kappe 10. Die Achse 3 ist als Rohr ausgebildet, das an seinem in den Eingriffsraum der Führungsschiene achsstummelförmig auslaufenden Ende mit einer Aufbördelung versehen ist, die einen radial über die Mantelfläche der rohrförmigen Achse 3 hinausragenden Kragen 8 bildet, gegen den die Laufrolle 6 mit einer Anlaufschulter 9 hinsichtlich einer axialen Bewegung abgestützt ist, die die Laufrolle von der Achse entfernen würde. Die Laufrolle weist einen Zwischenbereich 11 zwischen einem radial äußeren, die Lauffläche 12 aufweisenden Bereich und einer Achsnabe 13 auf, an der die Anlaufschulter 9 ausgebildet ist. In diesem Zwischenbereich sind über den Umfang verteilt drei parallel zur Achse 3 verlaufende Öffnungen 16 ausgebildet, in welche an der der Laufrolle 6 zugewandten Seite der Kappe 10 ausgebildete Vorsprünge 14 eingreifen, die radial federelastisch verformbar sind und Klinkenausbildungen 15 aufweisen, deren Nasen die der Kappe 10 im montierten Zustand abgewandten Berandungen der Öffnungen 16 in der Laufrolle 6 hintergreifen, sobald die Kappe 10 mit ihren Vorsprüngen 14 in die Öffnungen 16 der auf die Achse 3 aufgeschobenen Laufrolle 6 unter axialer Druckbeanspruchung eingreifen, so daß die Klinken 15 der federelastischen Vorsprünge 14 in die aus der rechten mittleren Figur ersichtliche Betriebsstellung gelangen. Figur 2 zeigt im unteren Bereich die miteinander zu verbindenden Einzelteile - Achse 3, Laufrolle 6 und Kappe 10 - vor der Montage.

Zwischen der Kappe 10 und der Laufrolle 6 ist ein Hohlraum gebildet, der der Aufnahme von Schmierfett dient und zum Zwecke der Weiterleitung des Fettes in den Gleitspalt zwischen Achse und Achsnabe der Laufrolle mit diesem in Verbindung steht. Die Fettkammer kann durch Ausnehmungen in der Laufrolle und/oder der Kappe vergrößert sein.

Wie aus der Stirnansicht ersichtlich, ist die Kappe mit in Umfangsrichtung gleichmäßig verteilten schlitzförmigen Öffnungen 18 versehen, die ggfs. mit der Fettkammer in Verbindung stehen und im übrigen auf die elastische Verformbarkeit der Kappe im Bereich der Vorsprünge 14 Einfluß haben, so daß die axiale Vorwärtsbewegung der Vorsprünge 14 bei Aufsetzen der Kappe 10 auf die Laufrolle 6 unter einer gewissen elastischen Verformung stattfindet, so daß die klinkenförmigen Hintergreifausbildungen 15 der Vorsprünge 14 die abgewandten Berandungen der Öffnungen 16 erreichen und nach Einrasten an diesen unter gewissem axialem Druck anliegen können. Auf diese Weise erhält man eine innige und spielfreie Verbindung zwischen Laufrolle und Kappe.

Die als Rohr ausgeführte Achse mit ihrer endseitigen Aufbördelung ist nach Art eines Hohlnietes gestaltet, weshalb unter Voraussetzung entsprechender Abmessungen ein solcher handelsüblicher Ausbildung als Achse eingesetzt werden kann.

## Patentansprüche

1. Laufrolleneinrichtung für die Führung von Torblättern, insbesondere von Sektionaltoren mit in Bewegungsrichtung aufeinanderfolgend aneinander angelenkten Paneelen, mit einer am Torblatt gehaltenen Achse (3) und einer auf dieser gleitend drehbar gelagerten, in einer ortsfest gehaltenen Führungsschiene (2) abrollend eingreifende Laufrolle (6), die gegen ein Abrutschen von der in dem Eingriffsraum (7) der Führungsschiene (2) stummelförmig endenden Achse (3) gesichert gehalten ist, wobei an dem im Eingriffsraum (7) der Führungsschiene (2) auslaufendem Ende der stummelförmigen Achse (3) eine Haltevorrichtung angeordnet ist, welche an der stummelförmigen Achse (3) als ein radial nach außen gerichteter Kragen (8) ausgeformt ist, dem die auf die Achse (3) von deren dem den Kragen (8) aufweisenden Ende entgegengesetzten Achsende her aufgeschobene Laufrolle (6) mit einer Anlaufschulter (9) gegen Abrutschen gesichert in Längsrichtung der Achse (3) gesehen gegenüberliegt,
**dadurch gekennzeichnet,**
daß die Achse (3) als Rohr und der Kragen (8) als nach radial auswärts gerichtete Aufbördelung des Rohres ausgebildet ist, und daß eine Kappe (10) vorgesehen ist, die das den Kragen (8) aufweisende Ende der Achse (3) übergreifend an der Laufrolle (6) festlegbar ist.

2. Laufrolleneinrichtung nach Anspruch 1,
**dadurch gekennzeichnet,**
daß die Achse (3) um eine vorbestimmte Strecke in ihrer Achsrichtung in einem Bock (4) verschiebbar gelagert ist.

3. Laufrolleneinrichtung nach Anspruch 1,
**dadurch gekennzeichnet,**
daß die als Rohr ausgeführte Achse (3) mit ihrer endseitigen Aufbördelung als Hohlniet ausgebildet ist.

4. Laufrolleneinrichtung nach Anspruch 2 oder 3,
**dadurch gekennzeichnet,**
daß die Kappe (10) an der Laufrolle (6) durch Aufklippen in deren Stirnseitenbereich (11) zwischen Lauffläche (12) und Achsnabe (13) befestigt ist.

5. Laufrolleneinrichtung nach Anspruch 4,
**dadurch gekennzeichnet,**
daß an der Kappe (10) zur Laufrolle (6) vorragend wenigstens zwei, vorzugsweise drei, in radialer Richtung federelastische Vorsprünge (14) mit Hintergreifhaken-Ausbildungen (15) vorgesehen sind, die in der Laufrolle (6) vorgesehene, achsparallele Öffnungen (6) durchgreifen und mit den Hintergreifhaken (15) federelastisch gehalten dem den Kragen (8) aufweisenden Ende der Achse (3) abgewandt liegende Berandungen der Öffnungen (16) der Laufrolle (6) hintergreifen.

6. Laufrolleneinrichtung nach einem der Ansprüche 2 bis 5,
**dadurch gekennzeichnet,**
daß zwischen der an der Laufrolle (6) befestigten Kappe (10) und der Laufrolle (6) Fettkammern (17) - ggfs. mit durch Ausnehmungen in der Laufrolle (6) und/oder der Kappe (10) gebildet - vorgesehen sind, die mit dem Gleitspalt zwischen der Achse (3) und der Achsnabe (13) der Laufrolle (6) in Verbindung stehen.

7. Laufrolleneinrichtung nach einem der Ansprüche 2 bis 6,
**dadurch gekennzeichnet,**
daß die Kappe (10) achsparallele Durchbrüche (18) - insbesondere in Umfangsrichtung schlitzförmig verlaufend - aufweist, die in die Fettkammern (17) münden können.

## Claims

1. Runner device for guiding doors, particularly sectional doors having panels which are successively hinged to one another in the direction of movement, having a spindle (3) attached to the door leaf and a runner (6) slidingly rotatably mounted thereon, engaging in and rolling along a fixed guide rail (2), said runner (6) being secured against slipping by the spindle (3) which terminates in a stump-like shape in the engagement chamber (7) of the guide rail (2), retaining means being provided on the end of the stump-like spindle (3) terminating in the engagement chamber (7) of the guide rail (2), said retaining means being formed on the stump-like spindle (3) as a radially outwardly directed collar (8) opposite which, viewed in the longitudinal direction of the spindle, is situated the runner (6) which has been pushed on to the spindle (3) from the end opposite the end provided with the collar (8), said runner being secured against slipping off by means of an abutment shoulder (9), characterised in that the spindle (3) is in the form of a tube and the collar (8) is constructed as a radially outwardly directed flanging of the tube, and in that a cap (10) is provided which can be secured to the runner (6), thereby extending over the end of the spindle (3) provided with the collar (8).

2. Runner device according to claim 1, characterised in that the spindle (3) is mounted so as to be movable to a certain extent in its axial direction in a mounting (4).

3. Runner device according to claim 1, characterised in that the spindle (3) in the form of a tube is constructed with its flanged end as a tubular rivet.

4. Runner device according to claim 2 or 3, characterised in that the cap (10) is attached to the runner (6) by being clipped on in the end face region (11) thereof between the running surface (12) and the hub (13) of the spindle.

5. Runner device according to claim 4, characterised in that on the cap (10), projecting towards the runner (6), there are at least two and preferably three radially resilient projections (14) having backwardly engaging hook portions (15), which pass through paraxial openings (16) provided in the runner (6) and, resiliently held by the engaging hooks (15), engage behind the edges of the openings (16) in the runner (6) which are remote from the end of the spindle (3) provided with the collar (8).

6. Runner device according to one of claims 2 to 5, characterised in that, between the cap (10) secured to the runner (6) and the runner (6) itself, are provided grease chambers (17) (optionally formed by recesses in the runner (6) and/or cap (10)) which communicate with the sliding gap between the spindle (3) and the spindle hub (13) of the runner (6).

7. Runner device according to one of claims 2 to 6, characterised in that the cap (10) has paraxial openings (18), particularly in the form of slots running in the circumferential direction, which may open into the grease chambers (17).

## Revendications

1. Système de roulettes porteuses pour le guidage de panneaux de porte, en particulier de portes composées de sections avec des panneaux articulés les uns aux autres et se suivant dans le sens du mouvement, avec un axe (3) maintenu sur le panneau de porte et avec une roulette porteuse (6) montée de façon à pouvoir tourner en glissant sur cet axe, roulette qui vient en prise en roulant dans un rail de guidage (2) maintenu à poste fixe, cette roulette étant maintenue contre toute chute par glissement en étant fixée par l'axe (3) se terminant en forme de moignon dans l'espace de saisie (7) du rail de guidage (2), un dispositif d'arrêt étant disposé à l'extrémité de l'axe (3) en forme de moignon qui s'étend dans l'espace de saisie (7) du rail de guidage (2), dispositif d'arrêt qui est formé sur l'axe (3) en forme de moignon comme un collet (8) orienté radialement vers l'extérieur, en regard duquel se trouve la roulette porteuse (6), bloquée par une butée (9) contre toute chute par glissement, vu dans le sens longitudinal de l'axe (3), roulette porteuse qui est enfilée par l'extrémité de son axe qui est opposée à l'extrémité qui présente le collet (8), système de roulettes porteuses caractérisé en ce que l'axe (3) est constitué sous la forme d'un tube et le collet (8) sous la forme d'un bourrelet du tube orienté radialement vers l'extérieur, et en ce que l'on prévoit un chapeau (10) qui peut être fixé sur la roulette porteuse (6) en venant en prise sur l'extrémité de l'axe (3) présentant le collet (8).

2. Système de roulettes porteuses selon la revendication 1, caractérisé en ce que l'axe (3) est monté de façon à pouvoir coulisser d'une étendue prédéterminée dans son sens axial dans un support (4).

3. Système de roulettes porteuses selon la revendication 1, caractérisé en ce que l'axe (3), réalisé sous la forme d'un tube, est constitué comme un rivet creux par son bourrelet situé du côté terminal.

4. Système de roulettes porteuses selon la revendication 2 ou 3, caractérisé en ce que le chapeau (10) est fixé sur la roulette porteuse (6) en l'enclipsant sur sa zone (11), située du côté frontal, entre la surface de roulement (12) et le moyeu de l'axe (13).

5. Système de roulettes porteuses selon la revendication 4, caractérisé en ce que sur le chapeau (10) on prévoit en saillie par rapport à la roulette porteuse (6) au moins deux et de préférence trois saillies (14) élastiques dans le sens radial, avec des crochets (15) qui viennent en prise par derrière et qui passent à travers des orifices (16) parallèles à l'axe, prévus dans la roulette porteuse (6) et qui viennent en prise par derrière avec les bordures des orifices (16) de la roulette porteuse (6) se trouvant situés à l'opposé de l'extrémité de l'axe (3) qui présente le collet (8, en étant maintenues de façon élastiques par les crochets (15) qui viennent en prise par derrière.

6. Système de roulettes porteuses selon l'une des revendications 2 à 5, caractérisé en ce qu'entre le chapeau (10) fixé sur la roulette porteuse (6) et la roulette porteuse (6), on prévoit des chambres de graissage (17), le cas échéant formées par des évidements dans la roulette porteuse (6) et/ou le chapeau (10), qui sont en liaison avec la fente de glissement entre l'axe (3) et le moyeu (13) de la roulette porteuse (6).

7. Système de roulettes porteuses selon l'une des revendications 2 à 6, caractérisé en ce que le chapeau (10) présente des interruptions parallèles à l'axe (18) - s'étendant en particulier en forme de fente dans le sens périphérique - qui peuvent déboucher dans les chambres à graisse (17).
